# EUROPÄISCHE PATENTANMELDUNG

(11) **EP 2 982 835 A1**
(43) Veröffentlichungstag der Anmeldung: **10.02.2016**
(21) Anmeldenummer: 15178553.2
(22) Anmeldetag: 28.07.2015
(51) Int. Cl.: F01K 23/10

(54) **WÄRMEKRAFTWERK MIT EINER DAMPFTURBINE**

(30) Priorität: 07.08.2014 DE 102014215672
(71) Anmelder: Siemens Aktiengesellschaft, 80333 München (DE)
(72) Erfinder: Bauer, Günter, 91074 Herzogenaurach (DE); Lenk, Uwe, 08064 Zwickau (DE); Tremel, Alexander, 91052 Erlangen (DE)

(57) **Zusammenfassung**

Die Erfindung nennt ein Wärmekraftwerk (1), umfassend eine primäre Wärmezufuhr (2), einen Dampferzeuger (6), eine Dampfturbine (10), und eine Zusatz-Gasturbine (14), wobei die primäre Wärmezufuhr (2) strömungstechnisch mit dem Dampferzeuger (6) verbunden ist, wobei die Zusatz-Gasturbine (14) strömungstechnisch mit dem Dampferzeuger (6) verbunden ist, und dazu eingerichtet ist, den Dampferzeuger (6) während einer Betriebspause der primären Wärmezufuhr (2) auf einer vordefinierten Mindesttemperatur zu halten, wobei ein Gebläse (20) umfasst ist, welches strömungstechnisch mit dem Dampferzeuger (6) verbunden ist. Die Erfindung nennt weiter ein Verfahren (30) zum Betrieb mit variabler Leistung für ein derartiges Wärmekraftwerk (1), wobei in Abhängigkeit eines Betriebszustandes der primären Wärmezufuhr (2), welcher definiert ist durch die von dieser bereitzustellenden Leistung, die Zusatz-Gasturbine (14) in Betrieb genommen wird.

## Beschreibung

Die Erfindung betrifft ein Wärmekraftwerk, welches eine primäre Wärmezufuhr, einen Dampferzeuger und eine Dampfturbine umfasst, wobei die primäre Wärmezufuhr strömungstechnisch mit dem Dampferzeuger verbunden ist. Die Erfindung betrifft weiter ein Verfahren zum Betrieb mit variabler Leistung für ein Wärmekraftwerk.

Der sichere Betrieb eines flächendeckenden Stromnetzes stellt insbesondere durch den Vormarsch der regenerativen Energieerzeugung besondere Anforderungen an konventionelle Kraftwerke, durch welche das Netz mit Energie versorgt wird. Regenerativ erzeugte Energie genießt mittlerweile in vielen Ländern aufgrund staatlicher Regelungen einen Einspeisevorrang im jeweiligen Netz. Die Leistung, die durch regenerative Energieerzeugung ins Netz eingespeist werden kann, ist naturgegeben erheblichen Schwankungen unterworfen. Dies führt auf der Seite des Netzbetreibers zur Notwendigkeit, diese Schwankungen in der Leistung über möglichst flexible konventionelle Kraftwerke ausgleichen zu können, und Leistungsspitzen bedarfsgerecht abzufangen.

Als eine Möglichkeit hat sich hierbei das Konzept des Gas- und-Dampf-Kraftwerks (GuD) etabliert. Ein GuD-Kraftwerk besteht meist aus einer oder auch mehreren Gasturbinen, welche in einem ersten Schritt durch die Verbrennung von Erdgas mechanische Energie erzeugen, die von einem Generator entsprechend in elektrische Energie umgewandelt wird. Die Abwärme, welche im Abgas der Verbrennung enthalten ist, wird in einem zweiten Schritt dazu genutzt, mittels eines Dampferzeugers eine Dampfturbine zu betreiben. Die dort vom mittels der Abgas-Abwärme erzeugten Wasserdampf generierte mechanische Energie wird ebenso durch einen Generator in elektrische Energie umgewandelt.

Die Verwendung einer Gasturbine im ersten Schritt hat gegenüber Kraftwerken mit anderen fossilen Energieträgern, wie z.B. Kohle oder Erdöl, oder gegenüber der Kernenergie den Vorteil einer teilweise deutlich geringeren Anlaufzeit. Diese Flexibilität führt zu einer schnelleren Verfügbarkeit der im Netz bereitzustellenden Energie. Durch die Verwendung der im Abgas der Gasturbine enthaltenen Abwärme zum Betrieb der Dampfturbine erhöht sich zudem der Wirkungsgrad der Anlage erheblich. Während eine reine Gasturbine üblicherweise ca. 40% des Energieinhaltes des eingesetzten Brennstoffs in elektrische Energie umwandelt, beträgt dieser Quotient bei einer GuD-Anlage bis zu 60%.

Die zur Steigerung des Wirkungsgrades wünschenswerte Kombination der Gasturbine mit einer Dampfturbine stellt jedoch besondere Bedingungen an den Betrieb: Wird eine GuD-Anlage aufgrund fehlender Nachfrage an Leistung im Netz außer Betrieb genommen, führt dies zu einem Abkühlen der Komponenten der Anlage, wobei die Geschwindigkeit des Auskühlens von der thermischen Kapazität der Komponenten abhängt. Der Dampfkreislauf sollte jedoch für den Betrieb der Dampfturbine eine Mindesttemperatur aufweisen. Die Komponenten des Dampfkreislaufes der Dampfturbine, insbesondere des Dampferzeugers, sind deshalb möglichst vor dem Auskühlen zu bewahren, denn je weiter die Anlage abgekühlt ist, umso länger dauert der Aufwärmprozess, und damit die Möglichkeit, die volle Leistung der Anlage bereitzustellen. Überdies ist ein wiederholtes Auskühlen und Aufwärmen der Komponenten des Dampferzeugers zu vermeiden, da hierbei jeweils thermomechanische Spannungen auftreten können, welche langfristig die Lebensdauer der Anlage verringern.

Da ein GuD-Kraftwerk ohne den Betrieb der Gasturbine nicht über einen längeren Zeitraum warmzuhalten ist, besteht eine Möglichkeit, ein Auskühlen des Dampferzeugers zu umgehen, darin, bei nicht nachgefragter Leistung im Netz die Gasturbine nur mit minimaler Leistung zu betreiben, und hierfür ggf. die Generatoren der Dampfturbine und evtl. auch der Gasturbine vom Netz zu nehmen. Dies ist jedoch aus Gründen des langfristigen Wirkungsgrades unvorteilhaft. Eine Alternative besteht in einem zusätzlichen extern gefeuerten Dampferhitzer, welcher den Dampfkreislauf und insbesondere den Dampferzeuger auf einer gewünschten Temperatur hält, während der Betrieb der Gasturbine eingestellt ist. Ein derartiger Dampferhitzer ist jedoch in den Dampfkreislauf zu integrieren, was insbesondere ein Nachrüsten bestehender Anlagen wesentlich erschwert.

Einen weiteren Ansatz zur Lösung des Problems des Auskühlens kann etwa die DE 10 2012 223 818 A1 lehren, wonach eine zweite, kleinere Gasturbine als Hilfsaggregat vorgesehen sein soll, durch deren Abgaswärme der Dampferzeuger warmgehalten werden kann. Hierbei ist jedoch nachteilig, dass der Volumenstrom des Hilfsaggregats variieren kann und vor allem bei geringen Volumenströmen eine ungleichmäßige Verteilung des Abgases in dem Dampferzeuger resultiert. Dadurch können sich Bereiche des Dampferzeugers ausbilden, welche unterschiedliche Temperaturen während des Warmhaltens aufweisen. Die Konsequenz daraus ist wiederum eine Verlängerte Anfahrzeit, da diese durch die Temperaturen der kältesten Bereiche in dem Dampferzeuger bestimmt ist.

Der Erfindung liegt daher die Aufgabe zugrunde, ein Wärmekraftwerk mit einer Dampfturbine anzugeben, in welchem der Dampferzeuger der Dampfturbine möglichst energieeffizient und gleichmäßig warmgehalten werden kann, wenn keine oder nur geringe elektrische Leistung vom Wärmeraftwerk zu produzieren ist. Dies soll insbesondere kontrolliert erfolgen, so dass die Variationen unterschiedlicher Temperaturen in dem Dampferzeuger beim Warmhalten weitgehend gering ausfallen. Der Erfindung liegt weiter die Aufgabe zugrunde, ein Verfahren zum Betrieb mit variabler Leistung für ein derartiges Wärmekraftwerk anzugeben.

Die erstgenannte Aufgabe wird erfindungsgemäß gelöst durch ein Wärmekraftwerk, umfassend eine primäre Wärmezufuhr, einen Dampferzeuger, eine Dampfturbine, und eine Zusatz-Gasturbine, wobei die primäre Wärmezufuhr strömungstechnisch mit dem Dampferzeuger verbunden ist, wobei die Zusatz-Gasturbine strömungstechnisch mit dem Dampferzeuger verbunden ist, und dazu eingerichtet ist, den Dampferzeuger während einer Betriebspause der primären Wärmezufuhr auf einer vordefinierten Mindesttemperatur halten, wobei ein Gebläse umfasst ist, welches strömungstechnisch mit dem Dampferzeuger verbunden ist.

Die zweitgenannte Aufgabe wird erfindungsgemäß gelöst durch ein Verfahren zum Betrieb mit variabler Leistung für ein vorbeschriebenes Wärmekraftwerk, wobei in Abhängigkeit eines Betriebszustandes der primären Wärmezufuhr, welcher definiert ist durch die von dieser bereitzustellenden Leistung, die Zusatz-Gasturbine in Betrieb genommen wird.

Als bereitgestellte Leistung der Wärmezufuhr ist hierbei insbesondere die Wärmeleistung zu verstehen, welche im Wärmekraftwerk zur Erzeugung von elektrischer Leistung genutzt werden kann.

Bevorzugt wird hierbei von der primären Wärmezufuhr im Betrieb des Wärmekraftwerks Wärmeenergie in einem Verbrennungsprozess aus einem fossilen Brennsoff erzeugt. Die erzeugte Wärmeenergie kann hierbei direkt zur Erwärmung des Dampferzeugers eingesetzt werden, über welchen die Dampfturbine betrieben wird, wie es beispielsweise in einem Kohlekraftwerk der Fall ist. Zur Erzeugung elektrischer Leistung im Betrieb des Wärmekraftwerks ist hierbei die Dampfturbine bevorzugt mechanisch an einen Generator gekoppelt. Insbesondere kann die primäre Wärmezufuhr zunächst auch eine primäre Wärmekraftmaschine, beispielsweise eine Gasturbine, betreiben, deren Abwärme den Dampferzeuger erwärmt. Insbesondere kann der Dampferzeuger hierbei auch noch zusätzlich, beispielsweise durch einen weiteren Verbrennungsprozess eines fossilen Brennstoffs, erhitzt werden. Eine derartige primäre Wärmekraftmaschine kann hierbei zur Erzeugung elektrischer Leistung mechanisch an einen Generator gekoppelt sein.

Eine vordefinierte Mindesttemperatur ist hierbei insbesondere durch thermomechanische Gegebenheiten im Dampferzeuger festzulegen, und kann über den Innenraum des Dampferzeugers insbesondere auch variieren. Bevorzugt ist die Mindesttemperatur dabei deutlich oberhalb der Umgebungstemperatur, insbesondere nahe der jeweils im Betrieb der Dampfturbine erreichten lokalen Temperatur.

Der Erfindung liegen hierbei folgende Überlegungen zugrunde:
Ein möglichst effizienter Betrieb eines Wärmekraftwerks der beschriebenen Art verlangt einerseits, den Betrieb nach Möglichkeit an die Nachfrage an Leistung im Netz anzupassen.
Dies kann je nach Auslastung des Netzes auch bedeuten, dass das Wärmekraftwerk bevorzugt vom Netz zu nehmen ist. In einem solchen Fall wäre bevorzugt der Betrieb vollständig einzustellen. Dies würde jedoch zu einem Auskühlen des Wärmekraftwerkes führen. Aufgrund der hohen auftretenden Arbeitsdrücke sind jedoch im Dampfkreislauf eines Wärmekraftwerks der vorbeschriebenen Art, und hierbei insbesondere im Dampferzeuger, Komponenten verbaut, welche häufig aus massiven, dicken Metallschichten gefertigt sind und dementsprechend bei Temperaturänderungen mechanischen Spannungen ausgesetzt sind. Temperaturänderungen im Dampferzeuger deshalb sind bei einem Betriebszustand, in welchem netzbedingt die primäre Wärmezufuhr herunterzufahren ist, nach Möglichkeit zu vermeiden.

Da eine primäre Wärmezufuhr aus thermodynamischen wie strömungstechnischen Gründen oftmals jedoch eine bestimmte Mindestmenge an Brennstoff pro Zeit für die Aufrechterhaltung ihres Betriebs benötigt, wird nun vorgesehen, die zum Aufrechterhalten der vordefinierten Mindesttemperatur im Dampferzeuger erforderliche Wärmemenge über eine Zusatz-Gasturbine bereitzustellen.

Eine überraschende Erkenntnis ist hierbei, dass die Dimensionierung der Zusatz-Gasturbine derart kompakt gestaltet werden kann, dass auch ein Nachrüsten bereits bestehender Anlagen möglich wird. Dies ist insbesondere deshalb möglich, da die von der Zusatz-Gasturbine zu produzierende Abwärme den Dampferzeuger nur auf einer Mindesttemperatur möglichst nahe der Betriebstemperatur zu halten hat, diesem jedoch darüber hinaus - anders als die primäre Wärmezufuhr - keine weitere Wärmeenergie für dessen Betrieb bereitzustellen hat, und deshalb auch entsprechend kompakter ausgestaltet werden kann als die primäre Wärmezufuhr.

Insbesondere kann die Zusatz-Gasturbine hierbei auch in einem Betriebszustand in Betrieb genommen werden, in welchem die vom Wärmekraftwerk ans Netz bereitzustellende Leistung unterhalb seiner nominalen Minimalleistung liegt. Die Leistung kann dann mittels der Zusatz-Gasturbine und einen an diese gekoppelten Generator erzeugt werden, während die primäre Wärmezufuhr außer Betrieb genommen werden kann.

Insbesondere findet nun hierbei auch die Außerbetriebnahme der Zusatz-Gasturbine in Abhängigkeit eines Betriebszustandes der primären Wärmezufuhr statt. Insbesondere richtet sich für die Definition des Betriebszustandes die bereitzustellende Leistung der primären Wärmezufuhr nach der zu generierenden elektrischen Leistung des Wärmekraftwerks.

Erfindungsgemäß umfasst das Wärmekraftwerk zudem ein Gebläse, welches strömungstechnisch mit dem Dampferzeuger verbunden ist. Das Gebläse kann hierbei durch die strömungstechnische Verbindung zusätzlich Luft in den Dampferzeuger blasen. Dies ist nützlich, wenn der Volumenstrom des Abgases der Zusatz-Gasturbine signifikant geringer ist als der Volumenstrom des Abgases einer primären Wärmekraftmaschine. Durch das Gebläse kann somit einer ungleichmäßigen Verteilung des Abgases der Zusatz-Gasturbine im Dampferzeuger vorgebeugt werden, welche dort zu unerwünschten lokalen Temperaturgradienten führen könnte. Insbesondere kann hierbei das heiße Abgas der Zusatz-Gasturbine (Heißgas) über einen Kanal in den Dampferzeuger einströmen, welcher baulich vom Gebläse getrennt ist. Das Gebläse kann zudem auch dazu eingerichtet sein, Abgas der Zusatz-Gasturbine, welches den Dampferzeuger bereits passiert hat und eine dementsprechend niedrigere Temperatur aufweist (Kaltgas), in den Dampferzeuger zu rezirkulieren.

Bevorzugt ist die primäre Wärmezufuhr als eine primäre Wärmekraftmaschine, insbesondere als wenigstens eine Gasturbine ausgebildet. Insbesondere kann die primäre Wärmekraftmaschine auch durch eine Mehrzahl von Gasturbinen gebildet werden. Ein GuD-Kraftwerk wird in einem Netz oftmals zum flexiblen Bereitstellen von Spitzenleistung sowie zum Ausgleich von Leistungsschwankungen, welche durch die ungleichmäßig bereitgestellte Leistung regenerativer Energieerzeugung auftreten, eingesetzt. Ist das Netz bereits voll ausgelastet, kann das GuD-Kraftwerk keine weitere Leistung mehr einspeisen. Sein Betrieb ist dementsprechend bevorzugt vom Netz zu trennen. Das Vorgehen, den Dampferzeuger mittels einer Zusatz-Gasturbine während einer Betriebspause der oder jeder Gasturbine auf einer vordefinierten Mindesttemperatur zu halten, erlaubt hierbei einen besonders energieeffizienten Betrieb.

Als vorteilhaft erweist es sich, wenn die maximale mittels der Zusatz-Gasturbine generierbare elektrische Leistung bis zu 10%, insbesondere bis zu 5%, der elektrischen Leistung des Wärmekraftwerks beträgt. Die elektrische Leistung ist hierbei bevorzugt durch einen Generator, welcher mechanisch an die Zusatz-Gasturbine gekoppelt ist, zu generieren. Eine Zusatz-Gasturbine mit einem derartigen Leistungsbereich ist dazu geeignet, im Betrieb ausreichend Abwärme zu produzieren, um den Dampferzeuger auf der vordefinierten Mindesttemperatur zu halten, und erlaubt dennoch eine kompakte Bauweise. Dies ist insbesondere im Hinblick auf eine Nachrüstung eines bereits bestehenden Wärmekraftwerks zu begrüßen.

Gemäß einer weiteren Ausführungsform der Erfindung ist das Gebläse über einen Strömungskanal mit dem Dampferzeuger verbunden, wobei die strömungstechnische Verbindung der Zusatz-Gasturbine mit dem Dampferzeuger über den Strömungskanal führt. Dies führt dazu, dass der vom Gebläse erzeugte Volumenstrom aus Luft und/oder Kaltgas beim Erreichen des Dampferzeugers bereits um das Heißgas angereichert ist, was eine besonders homogene Temperaturverteilung des Heißgas-Luft/Kaltgas-Volumenstroms ermöglicht.

Vorteilhafterweise ist das Gebläse zum Betrieb elektrisch mit der Zusatz-Gasturbine gekoppelt. Die elektrische Kopplung erfolgt dabei vorzugsweise über einen mechanisch mit der Zusatz-Gasturbine gekoppelten Generator. Hierdurch wird die für den Betrieb des Gebläses erforderliche elektrische Energie direkt von der Zusatz-Gasturbine bereitgestellt, wodurch eine Anbindung des Gebläses an das Netz obsolet wird, wodurch das Verfahren des Warmhaltens des Dampferzeugers unabhängig vom Zustand des Netzes durchgeführt werden kann.

Als weiter vorteilhaft erweist es sich, wenn das Gebläse mechanisch mit der Zusatz-Gasturbine zum Betrieb gekoppelt ist. Die Kopplung kann dabei beispielsweise über die Welle der Gasturbine erfolgen, wobei ggf. auch ein Getriebe zwischengeschaltet werden kann. Auch eine mechanische Kopplung an die Gasturbine erlaubt ein Warmhalten des Dampferzeugers unabhängig vom Netz.

Zweckmäßigerweise weist die Zusatz-Gasturbine eine Dichtklappe zur bedarfsweisen strömungstechnischen Trennung vom Dampferzeuger auf. Hierdurch kann im Normalbetrieb der primären Wärmezufuhr und einer zeitgleichen Betriebspause der Zusatz-gasturbine ein unerwünschtes Eindringen des Abgases der primären Wärmezufuhr in die Zusatz-Gasturbine unterbunden werden.

In einer weiter vorteilhaften Ausgestaltung des Verfahrens wird in einem Betriebszustand, in welchem die primäre Wärmezufuhr eine Leistung nahe ihrer maximalen Leistung, bevorzugt mehr als 90% ihrer maximalen Leistung, besonders bevorzugt mehr als 95% ihrer maximalen Leistung, insbesondere auch ihre maximale Leistung, bereitstellt, die Zusatz-Gasturbine in Betrieb genommen. Hierdurch kann bei einem erhöhten Leistungsbedarf im Netz das Wärmekraftwerk seine verfügbare Maximalleistung noch um die mittels der Zusatz-Gasturbine über einen daran gekoppelten Generator generierbaren elektrischen Leistung erweitern. Aufgrund der hohen Flexibilität der Zusatz-Gasturbine führt dies zu einer verbesserten Stabilität des Netzes.

In einer alternativen Ausgestaltung des Verfahrens hält in einem Betriebszustand, in welchem die primäre Wärmezufuhr außer Betrieb genommen wird, die Zusatz-Gasturbine durch ihren Betrieb den Dampferzeuger auf einer vordefinierten Mindesttemperatur. Dies unterbindet einerseits thermomechanische Spannungen, welche im Dampferzeuger bei einem Auskühlen auftreten können, was die Lebensdauer der Komponenten verlängert. Andererseits kann somit bei einer Betriebspause, da der Dampferzeuger näher an der Betriebstemperatur verbleibt, die Dampfturbine schneller wieder in Betrieb genommen werden, wodurch die Maximalleistung des Wärmekraftwerks schneller zur Verfügung steht.

Bevorzugt erzeugt hierbei der Dampferzeuger Dampf, wobei durch den Dampf die Dampfturbine auf einer vordefinierten Mindesttemperatur gehalten wird. Hierdurch können auch thermomechanische Spannungen, welche bei einem übermäßigen Abkühlvorgang außerhalb des Dampferzeugers im Dampfkreislauf auftreten könnten, unterbunden werden. Dies wirkt sich positiv auf die Lebensdauer und die erforderlichen Wartungszyklen des Wärmekraftwerks aus.

Zweckmäßigerweise wird mittels der Zusatz-Gasturbine elektrische Leistung für den Betrieb wenigstens einer Komponente des Wärmekraftwerks generiert. Als Komponente kann hierbei eine Kompressor und/oder eine Pumpe sowie ein Steuer- und/oder Leitsystem umfasst sein. Insbesondere kann auch ein Gebläse umfasst sein. Dies ermöglicht einerseits einen vom Netz unabhängigen Betrieb des Verfahrens. Andererseits kann das Wärmekraftwerk den Betrieb der primären Wärmezufuhr und der Dampfturbine unabhängig vom Netz wieder aufnehmen, was bei einem vollständigen Netzausfall zu einer schnellen Bereitstellung von Leistung und hiermit zu einer schnelleren Normalisierung des gesamten Netzbetriebes führt.

Nachfolgend wird ein Ausführungsbeispiel der Erfindung anhand einer Zeichnung näher erläutert. Hierbei zeigen jeweils schematisch:
- FIG 1: den strömungstechnischen Aufbau eines GuD-Wärmekraftwerks mit einer Zusatz-Gasturbine und Gebläse, und
- FIG 2: den Ablauf des Verfahrens zum Betrieb des Wärmekraftwerks nach FIG 1.

Einander entsprechende Teile und Größen sind in allen Figuren jeweils mit gleichen Bezugszeichen versehen.

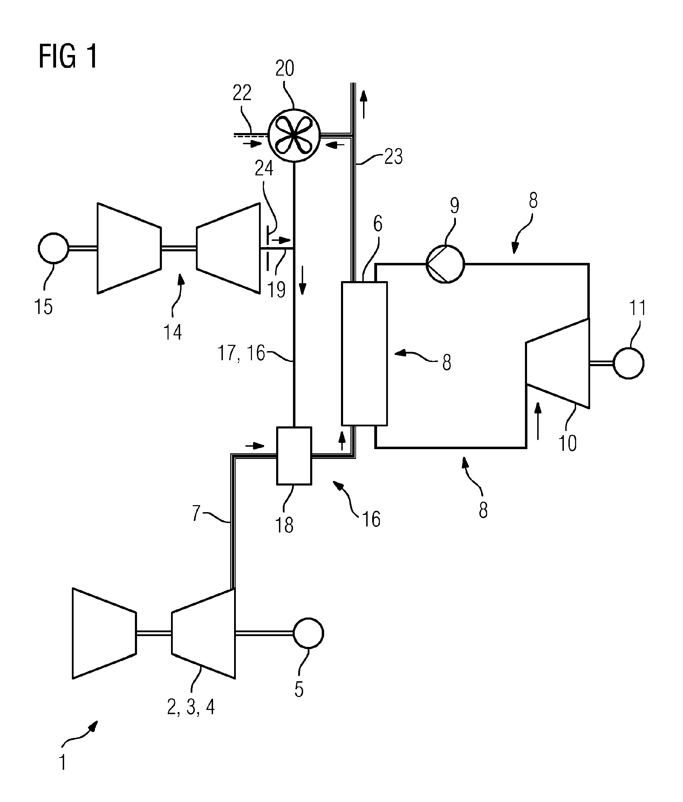

In FIG 1 ist schematisch der Aufbau eines Wärmekraftwerks 1 gezeigt. Das Wärmekraftwerk 1 umfasst dabei als primäre Wärmezufuhr 2 eine primäre Wärmekraftmaschine 3, welche als eine Gasturbine 4 ausgebildet ist und mechanisch mit einem ersten Generator 5 gekoppelt ist. Die Gasturbine 4 ist abgasseitig strömungstechnisch mit einem Dampferzeuger 6 verbunden. Dieser erzeugt im Betrieb des Wärmekraftwerks 1 durch die im Abgas 7 der Gasturbine 4 enthaltene Abwärme Dampf, der über den Dampfkreislauf 8 mittels einer Pumpe 9 zum Betrieb der Dampfturbine 10 eingesetzt wird. Die Dampfturbine 10 ist mechanisch mit einem zweiten Generator 11 gekoppelt. Die Funktionsweise des Dampferzeugers 6 ist dem Fachmann bekannt und soll hier nicht näher beschrieben werden.

Ist nun beispielsweise das Netz, in welches das Wärmekraftwerk 1 seine Leistung einspeist, bereits voll ausgelastet, so sind die Generatoren 5, 11 bevorzugt vom Netz zu nehmen. In einem solchen Fall wird nun im Ausführungsbeispiel auch der Betrieb der Gasturbine 4 und der Dampfturbine 10 eingestellt. Da hierdurch das Abgas entfällt, über welches dem Dampferzeuger 6 die nötige Wärme zum Betrieb der Dampfturbine 10 zugeführt wird, würde nun der Dampferzeuger 6 nach und nach abkühlen. Je tiefer dabei die Temperatur, auf die der Dampferzeuger 6 vor einer erneuten Inbetriebnahme der Gasturbine 4 auskühlt, umso länger dauert es, bis der Dampfkreislauf 8 bei einer Wiederaufnahme des Betriebs der Dampfturbine 10 hinsichtlich Druck und Temperatur wieder den optimalen Betriebszustand erreicht und dadurch die volle Leistungsfähigkeit der Dampfturbine 10 erlaubt.

Um dieses Auskühlen des Dampferzeugers 6 bzw. des Dampfkreislaufes 8 zu verhindern, ist nun im Wärmekraftwerk 1 eine Zusatz-Gasturbine 14 vorgesehen, welche mechanisch an einen dritten Generator 15 gekoppelt ist. Die mittels der Zusatz-Gasturbine 14 maximal erzeugbare elektrische Leistung beträgt hierbei 5-10% der maximalen elektrischen Leistung des Wärmekraftwerks 1.

Die Zusatz-Gasturbine 14 weist abgasseitig eine strömungstechnische Verbindung 16 mit dem Dampferzeuger 6 auf. Diese strömungstechnische Verbindung 16 führt hierbei durch einen Strömungskanal 17 und über eine Anströmhaube 18, über welche auch das Abgas 7 der Gasturbine 4 zum Dampferzeuger 6 geführt wird. Wird die Gasturbine 4 außer Betrieb genommen, kann das heiße Abgas 19 (Heißgas) der Zusatz-Gasturbine 14 den Dampferzeuger 6 vor dem unerwünschten Auskühlen bewahren. Um hierbei für einen ausreichenden Volumenstrom im Dampferzeuger 6 zu sorgen, ist zusätzlich ein Gebläse 20 vorgesehen. Da die Zusatz-Gasturbine 14 infolge ihres vergleichsweise geringen Leistungsspektrums einen deutlich geringeren Abgas-Volumenstrom aufweist als die Gasturbine 4, wird das Heißgas 19 vom Gebläse 20 zusammen mit Umgebungsluft 22 und rezirkuliertem Abgas 23, welches den Dampferzeuger 6 bereits passiert hat (Kaltgas), über den Strömungskanal 17 in den Dampferzeuger geblasen. Ein weiterer Anteil des Abgases 23 verlässt den Dampferzeuger 6, ohne über das Gebläse 20 rezirkuliert zu werden. Hierdurch wird einer ungleichmäßigen Verteilung des Heißgases 19 im Dampferzeuger 6 vorgebeugt. Die Betriebsleistung für das Gebläse 20 wird über den dritten Generator 15 bereitgestellt.

Der dritte Generator 15 kann überdies während einer derartigen Betriebspause der Gasturbine 4 und der Dampfturbine 10 auch die Pumpe 9 im Dampfkreislauf 8 antreiben, so dass die vom Heißgas 19 der Zusatz-Gasturbine 14 an den Dampferzeuger 6 abgegebene Wärme auf den ganzen Dampfkreislauf 8 verteilt werden kann. Hierdurch kann der gesamte Dampfkreislauf 8 nahe der Betriebstemperatur gehalten werden, was ein erneutes Anfahren der Dampfturbine 10 weiter erleichtert. Um zu verhindern, dass im Betrieb der Gasturbine 4 über die gemeinsame Anströmhaube 18 und den Strömungskanal 17 Abgas 7 der Gasturbine 4 in die Zusatz-Gasturbine 14 gelangt, weist letztere abgasseitig eine Dichtklappe 24 zum Verschluss während Betriebspausen auf.

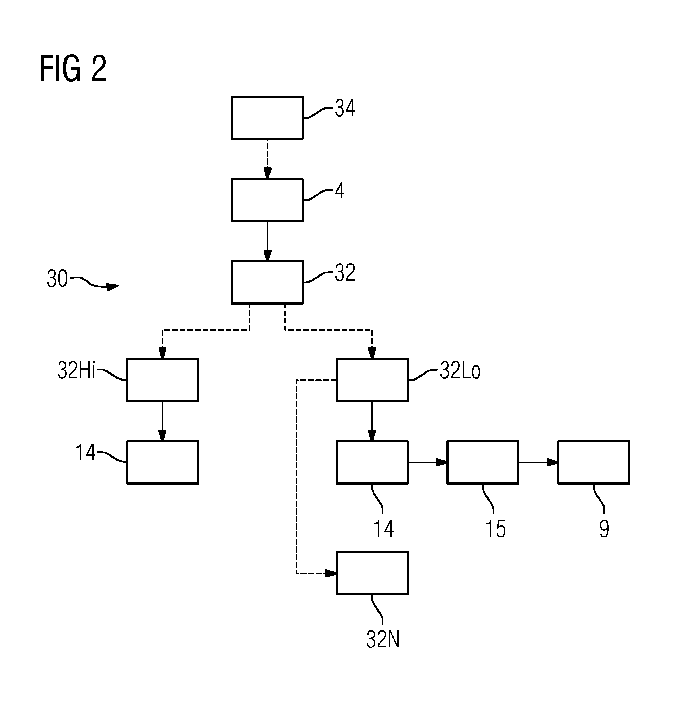

In FIG 2 ist schematisch ein Verfahren 30 zum Betrieb mit variabler Leistung eines Wärmekraftwerks 1 nach FIG 1 gezeigt. Zunächst wird ein Betriebszustand 32 der Gasturbine 4 in Abhängigkeit der von dieser ans Netz 34 bereitzustellenden Leistung ermittelt.

So kann beispielsweise das Netz 34 vom Wärmekraftwerk 1 die maximal mögliche Leistung anfordern, und dennoch Kapazitäten im Netz 34 unausgelastet bleiben. Dies führt dazu, dass in einem solchen Betriebszustand 32Hi auch die Gasturbine 4 möglichst die volle Leistung bereitzustellen hat. In diesem Fall wird die Zusatz-Gasturbine 14 in Betrieb genommen, um die verbleibenden freien Kapazitäten im Netz 34 weiter auszulasten.

Falls das Netz 34 auch ohne den Betrieb des Wärmekraftwerks 1 bereits voll ausgelastet ist, führt dies dazu, dass auch die Gasturbine 4 möglichst keine Leistung bereitzustellen hat, welche ins Netz einzuspeisen wäre. In einem solchen Betriebszustand 32Lo wird die Gasturbine 4 außer Betrieb genommen, und die Zusatz-Gasturbine 14 wird in Betrieb genommen, um den Dampferzeuger 6 nahe der Betriebstemperatur zu halten. Die elektrische Leistung, welche dabei mittels der Zusatz-Gasturbine 14 vom dritten Generator 15 erzeugt wird, kann hierbei dazu verwendet werden, über eine Pumpe 9 Dampf im Dampfkreislauf 8 in Bewegung zu halten, so dass die Wärme der Zusatz-Gasturbine 14 sich vom Dampferzeuger 6 auf den gesamten Dampfkreislauf 8 verteilt. Hierdurch wird ein Auskühlen des Dampferzeugers 6 und des Dampfkreislaufs 8 verhindert, was sich aufgrund von thermomechanischen Spannungen negativ auf die Lebensdauer der Komponenten auswirken würde.

Soll das Wärmekraftwerk 1 nun wieder einen erheblichen Beitrag an Leistung, beispielsweise 60-80% seiner Maximalleistung, ins Netz 34 einspeisen, wird in einem solchen Betriebszustand 32N der Normalbetrieb der Gasturbine 4 wieder aufgenommen und die Zusatz-Gasturbine 14 heruntergefahren. Dadurch, dass der Dampf im Dampferzeuger 8 während des Betriebszustands 32Lo nahe der Betriebstemperatur gehalten wurde, kann die Dampfturbine 10 schneller die angefragte Leistung bereitstellen. Das Wärmekraftwerk 1 arbeitet insgesamt effizienter.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Wärmekraftwerk (1), umfassend eine primäre Wärmezufuhr (2), einen Dampferzeuger (6), eine Dampfturbine (10), und eine Zusatz-Gasturbine (14),
wobei die primäre Wärmezufuhr (2) strömungstechnisch mit dem Dampferzeuger (6) verbunden ist,
wobei die Zusatz-Gasturbine (14) strömungstechnisch mit dem Dampferzeuger (6) verbunden ist, und dazu eingerichtet ist, den Dampferzeuger (6) während einer Betriebspause der primären Wärmezufuhr (2) auf einer vordefinierten Mindesttemperatur zu halten,
**dadurch gekennzeichnet, dass** ein Gebläse (20) umfasst ist, welches strömungstechnisch mit dem Dampferzeuger (6) verbunden ist.

2. Wärmekraftwerk (1) nach Anspruch 1,
wobei die primäre Wärmezufuhr (2) als eine primäre Wärmekraftmaschine (3), insbesondere als wenigstens eine Gasturbine (4) ausgebildet ist.

3. Wärmekraftwerk (1) nach Anspruch 1 oder Anspruch 2,
wobei die maximale mittels der Zusatz-Gasturbine (14) generierbare elektrische Leistung bis zu 10%, insbesondere bis zu 5%, der elektrischen Leistung des Wärmekraftwerks (1) beträgt.

4. Wärmekraftwerk (1) nach Anspruch 1,
wobei das Gebläse über einen Strömungskanal (17) mit dem Dampferzeuger (6) verbunden ist, und
wobei die strömungstechnische Verbindung (16) der Zusatz-Gasturbine (14) mit dem Dampferzeuger (6) über den Strömungskanal (17) führt.

5. Wärmekraftwerk (1) nach Anspruch 1 oder Anspruch 4,
wobei das Gebläse (20) zum Betrieb elektrisch mit der Zusatz-Gasturbine (14) gekoppelt ist.

6. Wärmekraftwerk (1) nach Anspruch 1 oder Anspruch 4,
wobei das Gebläse (20) zum Betrieb mechanisch mit der Zusatz-Gasturbine (14) gekoppelt ist.

7. Wärmekraftwerk (1) nach einem der vorhergehenden Ansprüche,
wobei die Zusatz-Gasturbine (14) eine Dichtklappe (24) zur bedarfsweisen strömungstechnischen Trennung vom Dampferzeuger (6) aufweist.

8. Verfahren (30) zum Betrieb mit variabler Leistung für ein Wärmekraftwerk (1) nach einem der vorhergehenden Ansprüche,
wobei in Abhängigkeit eines Betriebszustandes (32, 32Hi, 32Lo, 32N) der primären Wärmezufuhr (2), welcher definiert ist durch die von dieser bereitzustellenden Leistung, die Zusatz-Gasturbine (14) in Betrieb genommen wird.

9. Verfahren (30) nach Anspruch 8,
wobei in einem Betriebszustand (32Hi), in welchem die primäre Wärmezufuhr (2) eine Leistung nahe ihrer maximalen Leistung bereitstellt, die Zusatz-Gasturbine (14) in Betrieb genommen wird.

10. Verfahren (30) nach Anspruch 8,
wobei in einem Betriebszustand (32Lo), in welchem die primäre Wärmezufuhr (2) außer Betrieb genommen wird, die Zusatz-Gasturbine (14) durch ihren Betrieb den Dampferzeuger (6) auf einer vordefinierten Mindesttemperatur hält.

11. Verfahren (30) nach Anspruch 10,
wobei der Dampferzeuger (6) Dampf erzeugt, und
wobei durch den Dampf die Dampfturbine (10) auf einer vordefinierten Mindesttemperatur gehalten wird.

12. Verfahren (30) nach Anspruch 10 oder Anspruch 11,
wobei mittels der Zusatz-Gasturbine (14) elektrische Leistung für den Betrieb wenigstens einer Komponente (9) des Wärmekraftwerks (1) generiert wird.
